# FASCICULE DE BREVET EUROPEEN

(11) **EP 1 406 512 B1**
(45) Date de publication et mention de la délivrance du brevet: **02.09.2009**
(21) Numéro de dépôt: 02755078.9
(22) Date de dépôt: 21.06.2002
(51) Int. Cl.: A23K 1/12, A23K 1/14

(54) **TRAITEMENT DE SUBSTRATS LIGNOCELLULOSIQUES A L'OZONE.**
OZONBEHANDLUNG VON LIGNOCELLULOSE SUBSTRATEN
TREATMENT OF LIGNOCELLULOSIC SUBSTRATES WITH OZONE

(30) Priorité: 22.06.2001 FR 0108243
(43) Date de publication de la demande: 14.04.2004
(73) Titulaire: LABORATOIRES GOEMAR, 35400 Saint-Malo (FR); Grands Moulins de Paris, 94853 Ivry sur Seine Cedex (FR)
(72) Inventeur: BAILLI, Alain, F-95180 Menucourt (FR); COSTE, Christian, F-84870 Loriol du Contrat (FR); DUBOIS, Michel, F-78530 Buc (FR)
(74) Mandataire: Hubert, Philippe
(86) Numéro de dépôt international: PCT/FR2002/002162
(87) Numéro de publication internationale: WO 2003/000070

(56) Documents cités:
- CA-A1- 1 169 794
- FR-A1- 2 603 775
- US-A- 5 174 861
- W.C. NEELY: "Factors affecting the pretreatment of biomass with gaseous ozone" BIOTECHNOLOGY AND BIOENGINEERING., vol. 26, no. 1, 1984, pages 59-65, XP002192371 INTERSCIENCE PUBLISHERS, LONDON., GB ISSN: 0006-3592
- CHEMICAL ABSTRACTS, vol. 88, no. 13, 27 mars 1978 (1978-03-27) Columbus, Ohio, US; abstract no. 87925u, L. RABSTAD ET AL.: "Cellulose material-containing feed product" page 386; colonne 2; XP002192372 & NO 136 902 B (PETERSON, M. OG SOEN A/S)) 22 Août 1977
- PATENT ABSTRACTS OF JAPAN vol. 006, no. 085 (C-103), 22 mai 1982 (1982-05-22) -& JP 57 016690 A (HITACHI LTD), 28 janvier 1982 (1982-01-28)
- DATABASE WPI Section Ch, Week 198020, Derwent Publications Ltd., London, GB; Class D16, AN 1980-36022C, XP002192373 & SU 686 717 A1 (POULTRY RES TECHN) 28 Septembre 1979

## Description

La présente invention a pour objet un nouveau procédé de préparation de substrats lignocellulosiques destinés à l'alimentation animale et présentant un haut degré de digestibilité.

Elle concerne également les substrats lignocellulosiques susceptibles d'être obtenus par la mise en oeuvre de ce procédé.

L'invention trouve notamment application dans le domaine du traitement des produits issus de l'agriculture et de l'agroalimentaire, ainsi que dans la fabrication industrielle d'aliments pour animaux.

Les substrats lignocellulosiques en tant que tels se prêtent mal à l'alimentation animale du fait de leur faible digestibilité due à la présence de lignine.

Pour augmenter leur digestibilité, divers procédés ont été proposés. L'hydrolyse sous l'action de la vapeur d'eau sous pression (procédé STAKE) et l'attaque par le peroxyde d'hydrogène en présence de cyanamides (FR-A-2 560 898) en sont deux exemples. Toutefois, ces procédés présentent des difficultés de mise en oeuvre et sont coûteux. Ce qui explique qu'aucune mise en oeuvre industrielle n'a été réalisée à ce jour.

Selon la demande de brevet FR-A-2 603 775, il est proposé de traiter des pailles de céréales et autres matières lignocellulosiques sèches broyées par un gaz contenant de l'ozone en une quantité suffisante pour que soient absorbés entre 10 et 40 grammes d'ozone par kilogramme de paille sèche. Le procédé décrit dans ce document consiste à faire traverser un lit de paille ou autre substrat lignocellulosique par ledit gaz, ce qui permet d'augmenter la digestibilité avec un plafond d'environ 10%. A titre de comparaison et selon la demande FR-A-2 603 775, le procédé appliqué à une suspension aqueuse de paille (taux d'humidification de 500%) permet d'obtenir un accroissement du taux de digestibilité très faible, de l'ordre de quelques unités pour cent.

Le procédé décrit dans la demande FR-A-2 603 775 présente cependant les inconvénients suivants :
- la digestibilité de la paille sèche ne va pas au-delà d'un plafond et décroît même lorsque le taux d'ozonation est supérieur à 25 milligrammes d'ozone par gramme de paille sèche,
- le relativement faible accroissement de la digestibilité doit être compensé par l'addition d'un composé azoté,
- le procédé ne semble adapté que pour le traitement d'une petite quantité de substrat lignocellulosique,
- l'utilisation d'un réacteur à lit fixe ne permet pas au substrat, aussi finement divisé soit-il, de présenter une surface maximale à la réaction chimique,
- l'utilisation d'une quantité d'ozone uniquement déterminée par la quantité qui réagit avec les substrats lignocellulosiques ne permet pas une bonne maîtrise des conditions opératoires, et
- le mauvais rendement du système conduit à une surconsommation d'ozone pour un résultat plafonné.

Selon le brevet canadien n° 1 169 794, il est proposé un procédé de traitement de substrats lignocellulosiques à l'ozone comprenant le broyage dudit substrat pour obtenir une dimension d'au plus 4 mm, le mélange dudit substrat broyé avec de l'eau en un rapport de 1 : 10 à 10 : 1, puis l'exposition du mélange ainsi obtenu à l'ozone, la concentration en ozone dans le gaz vecteur étant comprise entre 0,75 à 6,8%.

Ce procédé, utilisé sur des quantités faibles de substrat, de l'ordre de 20 g, permet d'obtenir un accroissement du taux de digestibilité acceptable. Toutefois, il comporte les deux inconvénients suivants :
- d'une part, le temps de séjour dans le réacteur de traitement à l'ozone doit être d'au moins une heure et de préférence de 16 heures, ce qui constitue un temps relativement long dans un processus industriel, et
- d'autre part, la quantité d'eau utilisée est telle qu'elle conduit à une suspension de matière de sorte que le produit fini doit être soumis à un traitement ultérieur de séchage pour qu'il soit sous une forme acceptable pour les animaux auxquels ces produits finis sont destinés.

Il est intéressant de constater la divergence de résultats entre ces deux brevets, l'un prônant le traitement à l'ozone de substrats secs et l'autre prônant le traitement à l'ozone de substrats en suspensions aqueuses.

La Demanderesse a maintenant trouvé de manière surprenante que les inconvénients ci-dessus pouvaient être surmontés par un procédé consistant à traiter des substrats lignocellulosiques préalablement broyés et éventuellement humidifiés (sans créer de suspension aqueuse) lorsque le substrat est sec, tel que la paille, dans un réacteur agité, par de l'ozone produit par un gaz vecteur, l'ozone étant présent dans le gaz vecteur en une concentration déterminée, et avec un temps de séjour dans ledit réacteur largement réduit.

Ainsi, l'invention a pour objet un procédé de préparation de substrats lignocellulosiques présentant un haut degré de digestibilité, consistant à mettre en contact lesdits substrats préalablement broyés et éventuellement humidifiés lorsque le substrat est sec, dans un réacteur agité, avec de l'ozone produit à partir d'un gaz vecteur, l'ozone étant présent dans le gaz vecteur en une concentration comprise entre 80 et 200 g/m³ TPN et de préférence entre 140 et 160 g/m³ TPN, et pendant un temps de séjour dans ledit réacteur compris entre 8 et 40 min et de préférence entre 15 et 30 min, le taux d'humidification desdits substrats étant compris entre 1 et 6% de matière sèche et de préférence entre 1 et 5%, et la taille desdits substrats étant de 5 mm à 20 mm.

Ce procédé permet de résoudre pour la première fois et de façon entièrement satisfaisante le problème de digestibilité insuffisante et plafonnée des substrats lignocellulosiques relativement secs, en un temps de réaction largement raccourci, et d'obtenir des substrats lignocellulosiques jusqu'ici non disponibles présentant un taux d'humidité acceptable pour le stockage et pour l'alimentation des animaux et un haut degré de digestibilité.

Selon un second aspect, l'invention a pour objet les substrats lignocellulosiques susceptibles d'être obtenus par le procédé ci-dessus.

A titre d'exemple, avec le procédé de l'invention appliqué à la paille de blé (humidifiée à 4-5%), qui présente normalement un taux de digestibilité initial voisin de 40%, il est possible d'augmenter ce taux de 20% ou plus par un traitement à l'ozone en une quantité de 3 kg d'ozone par tonne de paille à une concentration d'ozone de 115 g/m³ TPN, pendant un temps de contact de 20 à 30 min. De même, pour les bagasses de canne à sucre dont la digestibilité moyenne, à l'état naturel, est de 20%, il est possible de porter ce taux à 40% ou plus par un traitement à l'ozone en une quantité de 3 kg d'ozone par tonne de bagasse et à 60 % pour un taux de traitement de 9 kg d'ozone par tonne de bagasse, à une concentration en ozone de 122 g/m³ TPN et pendant un temps de contact de 20 à 30 min.

Dans le procédé de l'invention, la concentration d'ozone dans le gaz vecteur est comprise entre 80 et 200 g/m³ TPN (Température et Pression Normales) et de préférence entre 140 et 160 g/m³ TPN. Lorsque cette concentration est inférieure à 80 g/m³ TPN, le taux de digestibilité du substrat ozoné n'est pas suffisamment élevé pour être intéressant pour l'alimentation directe des animaux. Lorsque la concentration d'ozone est supérieure à 200 g/m³ TPN, on peut observer une dégradation du substrat lignocellulosique telle que son transport et son utilisation deviennent difficiles. Le gaz vecteur est avantageusement constitué d'oxygène. Le gaz vecteur peut également être produit à partir d'air ambiant, filtré, comprimé et séché au point de rosée compris entre -50 et -70°C. Selon une autre alternative, le gaz vecteur peut être constitué d'un mélange en toute proportion d'oxygène pur et d'air filtré, comprimé et séché.

Selon une caractéristique particulière, la pression du gaz vecteur ozoné lors de la mise en contact avec lesdits substrats est comprise entre 0,6 et 1,5 bar relatif, et de préférence entre 0,6 et 1,2 bar relatif. Lorsque la pression est inférieure à 0,6 bar, il peut se poser le problème de la mauvaise pénétration de l'ozone dans le substrat lignocellulosique et de ce fait un traitement imparfait et une faible augmentation du taux de digestibilité. En revanche, lorsque la pression est supérieure à 1,5 bar, il peut se poser les problèmes suivants :
- au niveau de la génération de l'ozone : les ozoneurs industriels ne fonctionnent pas avec des pressions supérieures à 1,5 bar,
- au niveau du substrat traité : au-delà de cette pression, l'ozone pénètre dans le matériau lignocellulosique très en profondeur et, du fait de sa réactivité, déstructure quasi-complètement le matériau à traiter.

Les substrats lignocellulosiques utilisés dans la présente invention comprennent tout substrat issu de la filière agroalimentaire. On peut classer ces substrats en deux catégories, à savoir les substrats secs et les substrats humides. Des exemples de substrats secs comprennent les pailles de seigle, de blé, de luzerne, les cossettes de betterave et les grains de céréales, et des exemples de substrats humides comprennent les bagasses de canne à sucre, les sorghos, les ray-grass, les foins.

La quantité de substrat lignocellulosique traitée peut atteindre plusieurs dizaines de tonnes par heure, du fait de la forte concentration en ozone utilisée et de la spécificité du procédé développé, de sorte que le procédé de l'invention est adapté pour une utilisation à l'échelle industrielle.

Lorsque le substrat est sec, il doit être humidifié pour obtenir un résultat optimal. Cette humidification consiste en la pulvérisation d'eau ou d'eau ozonée en une quantité comprise entre 1 et 6% de matières sèches, et de préférence entre 1 et 5%. Si le taux d'humidification est supérieur à 6%, on obtiendra une diminution de la digestibilité.

Le substrat doit également être broyé avant son traitement à l'ozone. Cette opération permet d'améliorer le garnissage du réacteur en évitant les passages préférentiels, de multiplier la surface réactive du substrat et de favoriser l'homogénéité de brassage. Le broyage est effectué avant humidification et avant son entrée dans le réacteur agité par des procédés bien connus de l'homme du métier.

Selon une caractéristique particulière, la taille des substrats broyés est comprise entre 5 mm et 20 mm, la gamme de 10 à 20 mm étant davantage préférée. Lorsque la taille est inférieure à 5 mm, le substrat peut être à l'état de poudre pour les matériaux secs et à l'état de bouillie pour les substrats humides, états non acceptables. Lorsque la taille est supérieure à 20 mm, le traitement est difficile et on peut observer des passages préférentiels et des vides dans le garnissage.

Le traitement à l'ozone est effectué dans un réacteur agité qu'on appellera dans la suite réacteur d'ozonation. Ce réacteur peut être de type vertical ou horizontal.

D'une façon générale, le réacteur d'ozonation utilisé peut être constitué d'un corps cylindrique comportant un dispositif d'introduction du substrat lignocellulosique broyé, tel qu'une trémie, ainsi qu'un dispositif interne assurant un brassage et un temps de séjour du substrat lignocellulosique dans le réacteur pour conduire à un traitement optimal par l'ozone. La mise en contact du substrat lignocellulosique broyé avec le gaz vecteur ozoné peut être réalisée de façon continue ou discontinue dans ledit réacteur d'ozonation.

Le temps de séjour dans le réacteur d'ozonation est compris entre 8 et 40 min et de préférence entre 15 et 30 min. Lorsque ce temps de séjour est inférieur à 8 min, le traitement à l'ozone est insuffisant. Lorsqu'il est supérieur à 40 min, on observe une dégradation de la structure lignocellulosique.

Ainsi, contrairement aux procédés connus de l'art antérieur, le procédé de l'invention permet de traiter une grande quantité de substrat lignocellulosique, adaptée pour une utilisation à l'échelle industrielle, en un temps de réaction très rapide.

Les matériaux constitutifs du corps du réacteur d'ozonation seront choisis de telle sorte à assurer une résistance à l'abrasion et à l'oxydation générée par la présence d'ozone à forte concentration. Un tel matériau peut être par exemple un acier inoxydable connu de l'homme du métier.

Le dispositif de brassage dont le réacteur d'ozonation est muni peut être tout dispositif connu de l'homme du métier. Ce dispositif doit permettre un brassage homogène du substrat broyé tout en permettant son transport vers la sortie du réacteur d'ozonation ou son recyclage interne, suivant qu'on est en présence d'une réaction en continu ou en discontinu.

La vitesse de rotation dudit dispositif de brassage et la dimension du réacteur utilisé seront calculés par l'homme du métier en fonction de la quantité de matière à traiter, de la concentration en ozone utilisée et du temps de séjour visé. Selon un mode de réalisation préféré, pour traiter 3 tonnes de substrats lignocellulosiques broyés, avec une concentration en ozone de 150 g/m³ TPN dans un réacteur ayant 1,20 m de diamètre et 4,60 m de hauteur totale, la vitesse de rotation est de l'ordre de 100 à 120 tr/min.

Des exemples de dispositifs de brassage comprennent une vis d'Archimède, une vis conique ou un arbre d'entraînement sur lequel sont montées des pales.

Lorsque ce dernier type de dispositif est utilisé, à savoir arbre d'entraînement et pales, la distance entre les dernières pales et le bas du réacteur d'ozonation doit être suffisante pour que la masse à traiter ne soit pas stockée au bas dudit réacteur. L'homme du métier sera capable de déterminer une telle distance en fonction de la densité de la masse en réaction. Dans le cas des réacteurs d'ozonation verticaux, un dispositif de raclage et de brassage du fond conique peut être ajouté.

Dans le cas des réacteurs d'ozonation horizontaux, le dispositif de brassage est centré dans ledit réacteur. De façon avantageuse, on utilise un arbre d'entraînement comportant alternativement des jeux de pales de deux dimensions différentes calées à 120° sur l'arbre horizontal. Chaque étage de pales est constitué de 3 pales de même longueur et de grand diamètre, l'étage suivant étant constitué de 3 pales de l'autre longueur (plus petit diamètre), décalées par rapport aux pales du premier étage de 60°. Ces petites pales peuvent comporter un dispositif de mélange incliné de quelques degrés sur l'axe vertical afin d'assurer un mouvement de rotation hélicoïdal du substrat en cours de traitement. Ce mouvement assure par ailleurs un mouvement de translation horizontale de la matière à traiter avec un renouvellement permanent de l'interface.

Dans le cas des réacteurs d'ozonation verticaux, le dispositif de brassage est soit centré sur l'axe vertical dudit réacteur, soit excentré par rapport à cet axe et animé d'un mouvement giratoire autour de cet axe vertical. Dans ce dernier cas, on utilise de préférence une vis conique. L'axe de rotation de la vis présente un angle par rapport à l'axe vertical du réacteur d'ozonation. La partie supérieure de la vis est reliée à un dispositif d'entraînement par le biais de carters d'engrenage et la partie inférieure est centré au fond dudit réacteur sur l'axe vertical. La vis tourne sur elle-même pour assurer le brassage et tourne autour de l'axe vertical pour intéresser le volume total du substrat à traiter. En fonction de la vitesse de rotation de la vis autour de l'axe vertical du réacteur d'ozonation, le mouvement décrit peut être assimilé à une cycloïde simple ou à une hypocycloïde à pas raccourci.

Le dispositif de brassage est entraîné par un dispositif électromécanique permettant d'ajuster la vitesse du dispositif de brassage pour assurer avec précision le temps de séjour visé dans le réacteur d'ozonation. De préférence, le dispositif de brassage est entraîné par un groupe moto-réducteur à vitesse variable.

Le dispositif électromécanique est lui-même doté d'un ou de deux dispositifs de centrage et d'étanchéité bien connus de l'homme du métier.

Dans le cas des substrats lignocellulosiques secs nécessitant une humidification, le réacteur d'ozonation est muni également d'un dispositif d'humidification de la masse en réaction. Un exemple d'un tel dispositif comprend les buses de pulvérisation. La vitesse d'humidification sera déterminée en fonction de la quantité d'eau nécessaire pour obtenir le taux d'humidité choisi. L'homme du métier pourra aisément déterminer une telle vitesse.

Le réacteur d'ozonation est également muni d'un ou plusieurs dispositifs d'injection du gaz vecteur ozoné, ledit gaz étant lui-même produit à partir d'un ozoneur bien connu de l'homme du métier. Le ou les dispositifs d'injection du gaz vecteur ozoné sont conçus de telle sorte à assurer une répartition du gaz dans ledit substrat broyé avec une vitesse d'injection suffisante pour assurer une bonne pénétration dudit gaz dans ledit substrat. Ce sont par exemple des buses d'injection. D'une façon générale, la vitesse d'injection du gaz vecteur ozoné est comprise entre 30 et 60 m.s⁻¹.

Dans le cas des réacteurs d'ozonation horizontaux possédant un seul dispositif d'injection du gaz vecteur ozoné, celui-ci est placé dans la partie amont dudit réacteur, juste après le dispositif d'introduction du substrat broyé et le dispositif d'humidification. Lorsque ce type de réacteur comporte plusieurs dispositifs d'injection du gaz vecteur ozoné, ceux-ci peuvent être placés sur toute la longueur du dispositif de brassage, par exemple entre les pales. D'une façon générale, ces dispositifs d'injection seront disposés à une distance comprise entre 0,08 d et 0,15 d, où d représente le diamètre du réacteur. Le nombre de dispositifs d'injection sera choisi de telle façon que la vitesse d'injection rentre dans la gamme indiquée ci-dessus. Une telle disposition permet un meilleur contrôle de la concentration d'ozone utilisée.

Dans le cas des réacteurs d'ozonation verticaux, les dispositifs d'injection du gaz vecteur ozoné sont placés dans la partie basse dudit réacteur afin que leur action soit du type contre-courant.

Le réacteur d'ozonation est également généralement muni d'un dispositif d'évacuation du gaz vecteur ozoné après réaction à la partie supérieure du réacteur d'ozonation (résiduel d'ozone présent dans le gaz vecteur après réaction) et d'un dispositif de mesure de la pression bien connus de l'homme du métier.

Enfin, le réacteur d'ozonation est muni d'un dispositif de sortie du produit traité situé à l'opposé du dispositif d'introduction du substrat lignocellulosique broyé. Ce dispositif de sortie peut être constitué par exemple de fenêtres pratiquées dans le fond plat opposé à l'introduction. Dans le cas d'une réaction en continu, le dispositif de sortie du produit, ainsi que le dispositif d'introduction du substrat lignocellulosique broyé doivent être étanches. Un tel dispositif est par exemple une vanne alvéolaire.

Par ailleurs, la réaction d'ozonation étant du type exothermique, le corps du réacteur d'ozonation est habituellement muni d'un dispositif de contrôle de la température, ainsi qu'un dispositif de refroidissement permettant de maintenir une température constante à l'intérieur dudit réacteur et dans le milieu réactionnel sans gradient de température vertical ou radial, et ce durant le temps nécessaire à la réaction.

Ce refroidissement efficace du réacteur d'ozonation favorise une utilisation sécuritaire de celui-ci, et permet un contrôle précis de la réaction d'ozonation.

Le dispositif de refroidissement peut être situé sur la partie externe du réacteur d'ozonation ou dans la partie interne de celui-ci. Il peut être par exemple alimenté en eau froide sous pression ou par l'intermédiaire d'un circuit d'eau glacée produite par un groupe frigorifique. Le corps du réacteur d'ozonation est avantageusement refroidi au moyen d'un dispositif de refroidissement externe qui peut être constitué par exemple par un dispositif classique de type « WATER JACKET » ou par un circuit constitué de demi-coquilles assurant la captation du flux thermique provenant de la masse réactionnelle et l'évacuant vers l'extérieur.

Le substrat lignocellulosique traité à l'ozone dans le réacteur d'ozonation sera collecté, par exemple dans une trémie, pour être ensuite dirigé vers l'ensachage, le pesage ou toute autre opération de conditionnement avant distribution. On obtient ainsi un produit fini prêt à l'emploi, ayant un haut degré de digestibilité de sorte qu'aucun agent de complément n'est nécessaire, et destiné à l'alimentation animale, notamment pour l'alimentation des bovins, ovins et de la volaille.

L'invention sera mieux comprise à la lecture des exemples et schémas annexés donnés uniquement à titre illustratif mais non limitatif et dans lesquels :
- la figure 1 est une courbe montrant la variabilité de la digestibilité *in vitro* en fonction du taux de traitement à l'ozone du substrat lignocellulosique sec humidifié (paille) dans un réacteur dynamique (agité) et dans un réacteur statique, et
- la figure 2 est une courbe montrant la variabilité de la digestibilité *in vitro* en fonction du taux de traitement à l'ozone du substrat lignocellulosique humide (bagasse) dans un réacteur dynamique (agité) et dans un réacteur statique.

### Exemple 1 : Comparaison de la modification du taux de digestibilité de paille traitée dans un réacteur dynamique et dans un réacteur statique

On a broyé de la paille de blé jusqu'à obtenir une dimension de l'ordre de 13 mm. Puis on a traité ladite paille broyée, ayant divers taux d'humidification par humidification préalable, avec un gaz vecteur ozoné, soit dans un réacteur statique (R. Ste), c'est-à-dire un réacteur contenant un lit fixe de paille traversé de bas en haut par un courant d'ozone supporté par le gaz vecteur oxygène, soit dans un réacteur dynamique (R. Dym) (ou agité), c'est-à-dire un réacteur vertical ou horizontal présentant comme dispositif de brassage un arbre et des pales (réacteur horizontal) ou bien une vis centrale avec recirculation (réacteur vertical), le temps de séjour dans les réacteurs étant de 20 à 30 min.

On a réalisé 5 essais ayant les caractéristiques suivantes :
- x : concentration d'ozone (CO₃) de 115 g/m³ TPN, siccité de la paille de 89,6%, réacteur dynamique,
- : concentration d'ozone de 111,5 g/m³ TPN, siccité de la paille de 85%, réacteur statique,
- o : concentration d'ozone de 47 g/m³ TPN, siccité de la paille de 85%, réacteur statique,
- ∇ : concentration d'ozone de 47 g/m³ TPN, siccité de la paille de 55%, réacteur statique, et
- ? : concentration d'ozone de 115 g/m³ TPN, siccité de la paille de 55%, réacteur statique.

Après traitement, on a déterminé la digestibilité *in* vitro (DIV) selon la méthode de Tilley et Terry, en pour cent, en fonction du taux de traitement à l'ozone, lui même exprimé en pour cent d'ozone par matière sèche (3% signifie qu'on a utilisé 30 g d'ozone pour traiter 1000 g de substrat).

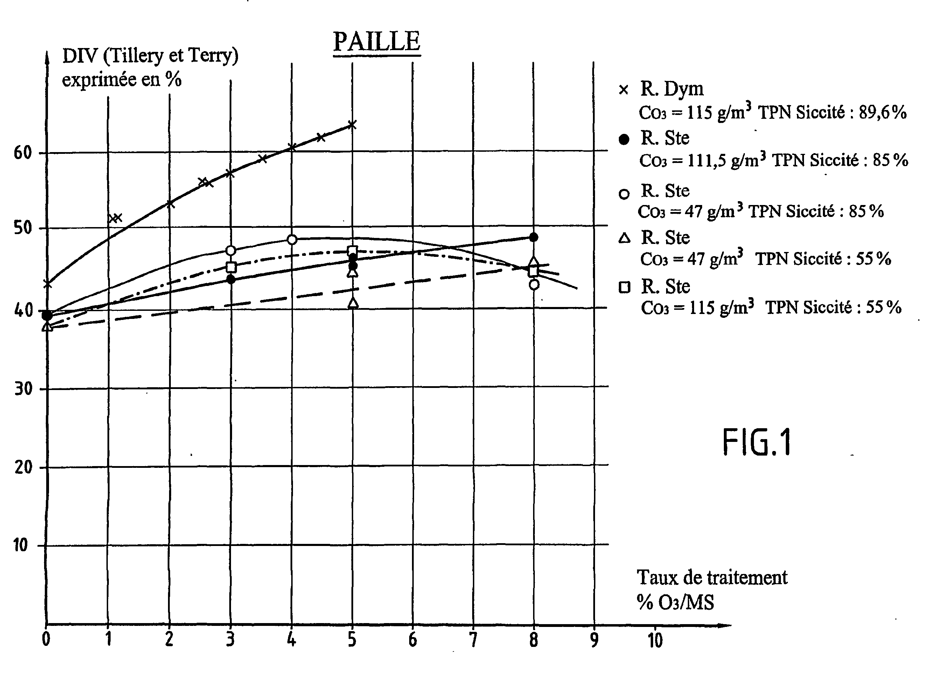

Les résultats de ces tests sont donnés sous forme de courbes sur la figure 1.

Les résultats obtenus amènent aux deux conclusions suivantes :
Premièrement, dans le cas des réacteurs statiques, le fait d'augmenter la concentration en ozone, dans le cas présent de 47 g/m³ à 115 g/m³, à 55% de siccité, ne fait que très peu varier la digestibilité de la paille, ce qui est en accord avec les résultats obtenus selon la demande de brevet FR-A-2 603 775.

Deuxièmement, lorsqu'on utilise un réacteur dynamique et une forte concentration d'ozone (115 g/m³), les résultats de la digestibilité sont croissants en fonction du taux de traitement appliqué.

Ces résultats prouvent de façon éloquente l'accroissement de la digestibilité à la condition de travailler avec des facteurs opératoires parfaitement maîtrisés.

### Exemple 2: Comparaison de la modification du taux de digestibilité de bagasse traitée dans un réacteur dynamique et dans un réacteur statique

On a répété le mode opératoire de l'exemple 1, à ceci près que le substrat lignocellulosique utilisé était de la bagasse et qu'on a effectué les 3 essais suivants :
- × : concentration d'ozone de 112 g/m³ TPN, réacteur dynamique,
- : concentration d'ozone de 111,8 g/m³ TPN, réacteur statique,
- o : concentration d'ozone de 46 g/m³ TPN, réacteur statique,

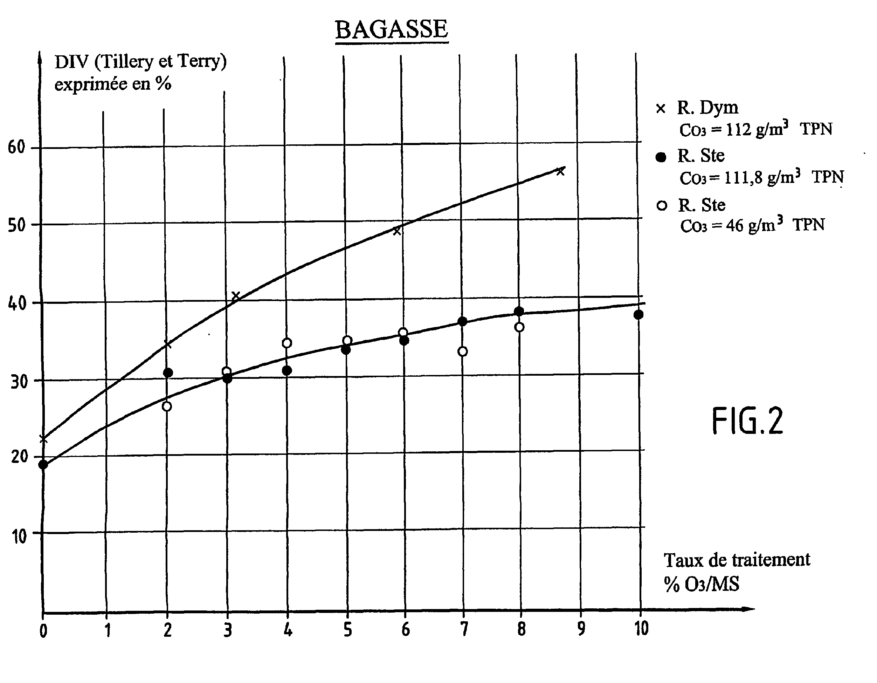

Les résultats de ces tests sont donnés sous forme de courbes sur la figure 2.

Les résultats obtenus amènent aux mêmes conclusions qu'indiquées dans l'exemple 1.

### Exemple 3 : Amélioration de la digestibilité des grains de blé traités à l'ozone

L'analyse de la digestibilité des grains de blé traités à l'ozone a été réalisée sur des coqs selon la mesure de l'énergie métabolisable (EMA), conforme aux procédures d'élevage SVDC 03 et SVDM 01. La méthode appliquée est la méthode rapide de mesure de l'énergie métabolisable mise au point par Monsieur Lessire de l'INRA et la méthode de détermination de la viscosité des extraits aqueux (Méthode au viscomètre, Norme NFV 03749).

Les coqs, 9 par lot, ont été nourris pendant 8 jours avec 4 lots différents de grains de blé non traités ou traités à l'ozone de la façon suivante :
- lot 1 : grains non traités
- lot 2 : grains traités par 3 g d'ozone par kilogramme de grains (85 g/m³ TPN) à 4% d'humidité
- lot 3 : grains traités par 4 g d'ozone par kilogramme de grains (85 g/m³ TPN) à 4% d'humidité
- lot 4 : grains traités par 5 g d'ozone par kilogramme de grains (85 g/m³ TPN) à 4% d'humidité.

Les grains de blé correspondaient à 97% de la ration alimentaire.

Les résultats bruts sont donnés dans le tableau ci-après dans lequel :
- VU signifie viscosité utile,
- EB signifie énergie brute,
- MS signifie matière sèche.

**Tableau**

| | Echantillon 1 | Echantillon 2 | Echantillon 3 | Echantillon 4 |
|---|---|---|---|---|
| Humidité (%) | 12,6 | 15,5 | 15,5 | 15,4 |
| Protéine brute (%) | 10,32 | 9,92 | 10,04 | 10,09 |
| Matière grasse (%) | 1,38 | 1,36 | 1,33 | 1,42 |
| Cellulose brute (%) | 2,06 | 1,96 | 1,76 | 1,75 |
| Mat. Minérale (%) | 1,49 | 1,43 | 1,38 | 1,38 |
| Amidon (%) | 60,39 | 58,81 | 58,14 | 58,01 |
| Sucres (%) | 2,19 | 2,75 | 2,75 | 2,88 |
| Paroi (%) | 10,54 | 9,54 | 9,59 | 8,91 |
| Visc. Spécif. (cPs/g sec) | 0,30 | 0,40 | 0,50 | 0,40 |
| VU pentosane (Log/sec) | 1,80 | 2,40 | 2,40 | 2,20 |
| EB (kCal/kg MS) | 4369 | 4354 | 4369 | 4347 |
| EMA (kCal/kg MS) | 3604±26 | 3597±26 | 3578±12 | 3618±14 |
| EMA/EB (%) | 82,5 | 82,6 | 81,9 | 83,2 |

### Analyse des résultats

Dans le cadre de l'alimentation des volailles, deux paramètres sont à considérer : la viscosité et l'énergie métabolisable (EMA). La viscosité est considérée comme un inconvénient et constitue un bon facteur pour l'analyse de la digestibilité.

L'effet du traitement à l'ozone sur les grains a entraîné quelques variations de composition, faibles, mais significatives : une légère dégradation de la cellulose brute et de la composition en amidon et des parois, ainsi qu'une augmentation des sucres libres.

Cette dégradation se vérifie à la fois en viscosité spécifique et en viscosité pentosane. En effet, une légère dégradation des polysaccharides, spécifiquement des pentosanes, entraîne d'abord un accroissement de la viscosité, par solubilisation des pentosanes et des fragments courts de cellulose.

Si l'oxydation est augmentée, une baisse de la viscosité est prévisible. Cette baisse apparaît à partir de 5 g d'ozone par kg de grains.

Cette analyse est confirmée par le fait que l'EMA s'accroît réellement à partir de 5 d'ozone par kg de grains, c'est-à-dire à partir de l'échantillon 4.

## Revendications

1. Procédé de préparation de substrats lignocellulosiques présentant un haut degré de digestibilité, **caractérisé en ce qu'**il consiste à mettre en contact lesdits substrats lignocellulosiques préalablement broyés et humidifiés dans le cas des substrats secs, dans un réacteur agité, avec de l'ozone produit à partir d'un gaz vecteur,
l'ozone étant présent dans le gaz vecteur en une concentration comprise entre 80 et 200 g/m³ TPN, et
avec un temps de séjour dans ledit réacteur compris entre 8 et 40 min,
le taux d'humidification desdits substrats étant compris entre 1 et 6 % de matière sèche et de préférence entre 1 et 5%, et
la taille desdits substrats broyés étant de 5 mm à 20 mm.

2. Procédé de préparation de substrats lignocellulosiques selon la revendication 1, **caractérisé en ce que** le temps de séjour est compris entre 15 et 30 min.

3. Procédé de préparation de substrats lignocellulosiques selon l'une des revendications 1 ou 2, **caractérisé en ce que** la concentration de l'ozone dans le gaz vecteur est comprise entre 140 et 160 g/m³ TPN.

4. Procédé de préparation de substrats lignocellulosiques selon l'une quelconque des revendications 1 à 3, **caractérisé en ce que** la taille desdits substrats broyés est de 10 mm à 20 mm.

5. Procédé de préparation de substrats lignocellulosiques selon l'une quelconque des revendications 1 à 4, **caractérisé en ce que** la pression du gaz vecteur ozoné lors de la mise en contact avec lesdits substrats est comprise entre 0,6 et 1,5 bar relatif et de préférence entre 0,6 et 1,2 bar relatif.

6. Procédé de préparation de substrats lignocellulosiques selon l'une quelconque des revendications 1 à 5, **caractérisé en ce que** les substrats lignocellulosiques sont choisis parmi les substrats secs tels que les pailles de seigle, blé, luzerne, les cossettes de betterave et les grains de céréales, et les substrats humides tels que les bagasses de canne à sucre, les sorghos, les ray-grass et les foins.

7. Substrat lignocellulosique susceptible d'être obtenu par le procédé selon l'une quelconque des revendications 1 à 6.

## Claims

1. Process for the preparation of lignocellulosic substrates having a high degree of digestibilité, **characterized in that** it consists in bringing said lignocellulosic substrates, which have been ground beforehand, and moistened in the case of dry substrates, in a stirred reactor, into contact with ozone produced from a carrier gas,
the ozone being present in the carrier gas in a concentration of between 80 and 200 g/m³ NTP, and
with a residence time in said reactor of between 8 and 40 min,
the degree of moistening of said substrates being between and 6% based on the dry matter, and preferably between 1 and 5%, and
the size of said ground substrates is between 5 mm to 20 mm.

2. Process for the preparation of lignocellulosic substrates according to claim 1, **characterized in that** the residence time is between 15 and 30 min.

3. Process for the preparation of lignocellulosic substrates according to claim 1 or 2, **characterized in that** the concentration of ozone in the carrier gas is between 140 and 160 g/m³ NTP.

4. Process for the preparation of lignocellulosic substrates according to any one of claims 1 to 3, **characterized in that** the size of said ground substrates is 10 mm to 20 mm.

5. Process for the preparation of lignocellulosic substrates according to any one of claims 1 to 4, **characterized in that** the relative pressure of the ozonized carrier gas when it is brought into contact with said substrates is between 0.6 and 1.5 bar and preferably between 0.6 and 1,2 bar.

6. Process for the preparation of lignocellulosic substrates according to any one of claims 1 to 5, **characterized in that** the lignocellulosic substrates are selected from dry substrates such as rye, wheat and alfalfa straws, sugar beet cossettes and cereal grains, and moist substrates such gas sugar cane bagasse, sorghums, ray grasses and hays.

7. Lignocelluiosic substrate obtainable by the process according to any one of claims 1 to 6.

## Patentansprüche

1. Verfahren zur Gewinnung von Lignocellulose-Substraten, die einen hohen Verdaulichkeitsgrad aufweisen, **dadurch gekennzeichnet, daß** es darin besteht, die zuvor gemahlenen und - im Fall von Trockensubstraten - befeuchteten Lignocellulose-Substrate in einem bewegten Reaktor mit aus einem Trägergas erzeugten Ozon in Kontakt zu bringen,
wobei das Ozon in dem Trägergas in einer Konzentration von 80 bis 200g/m³ NTP vorliegt, und
mit einer Verweildauer in dem Reaktor zwischen 8 und 40 Minuten,
wobei der Befeuchtungsgrad der Substrate zwischen 1 und 6 %Trockenmasse und vorzugsweise zwischen 1 und 5 % liegt, und
wobei die Größe der gemahlenen Substrate zwischen 5 mm und 20 mm liegt.

2. Verfahren zur Gewinnung von Lignocellulose-Substraten nach Anspruch 1, **dadurch gekennzeichnet, daß** die Verweildauer zwischen 15 und 30 Minuten liegt.

3. Verfahren zur Gewinnung von Lignocellulose-Substraten nach einem der Ansprüche 1 oder 2, **dadurch gekennzeichnet, daß** die Konzentration des Ozons in dem Trägergas zwischen 140 und 160 g/m³ NTP liegt.

4. Verfahren zur Gewinnung von Lignocellulose-Substraten nach einem der Ansprüche 1 bis 3, **dadurch gekennzeichnet, daß** die Größe der gemahlenen Substrate zwischen 10 mm und 20 mm liegt.

5. Verfahren zur Gewinnung von Lignocellulose-Substraten nach einem der Ansprüche 1 bis 4, **dadurch gekennzeichnet, daß** der Druck des ozonhaltigen Trägergases bei Inkontaktbringen mit den Substraten zwischen 0,6 und 1,5 bar relativ und vorzugsweise zwischen 0,6 und 1,2 bar relativ liegt.

6. Verfahren zur Gewinnung von Lignocellulose-Substraten nach einem der Ansprüche 1 bis 5, **dadurch gekennzeichnet, daß** die Lignocellulose-Substrate aus den Trockensubstraten, wie Roggen-, Weizen-, Luzernestroh, Rübenschnitzeln und Getreidekörnern, sowie aus den feuchten Substraten, wie Zuckerrohrbagasse, Sorgho, Raygras und Heu ausgewählt sind.

7. Lignocellulose-Substrat, das geeignet ist, durch das Verfahren nach einem der Ansprüche 1 bis 6 erhalten zu werden.
